# EUROPEAN PATENT APPLICATION

(11) **EP 4 105 832 A1**
(43) Date of publication of application: **21.12.2022**
(21) Application number: 21179208.0
(22) Date of filing: 14.06.2021
(51) Int. Cl.: G06N 3/04, G06N 3/063, G06N 3/08

(54) **NEURAL NETWORK CIRCUIT FOR DEEP ARTIFICIAL NEURONAL NETWORKS USING DEEP FEEDBACK CONTROL**

(71) Applicant: ETH Zurich, 8092 Zurich (CH)
(72) Inventor: GREWE, Benjamin, 8044 Gockhausen (CH); MEULEMANS, Alexander, 3004 Bern (CH); FARINHA, Matilda, 8057 Zürich (CH); GARCIA ORDONEZ, Javier, 8057 Zürich (CH); SACRAMENTO, Joao, 8810 Horgen (CH); ACEITUNO, Pau, 8057 Zürich (CH)

(57) **Abstract**

The present invention concerns a neural network circuit including a control unit (40) which is individually connected to each respective neuron of the circuit, the neurons in the hidden and output layers comprising a forward compartment for processing signals coming from preceding layers, a feedback compartment for processing feedback signals coming from the control unit and a central compartment for generating and sending a signal to the next layer or to the control unit. The control unit generates and sends to the feedback compartment of each respective neuron a feedback signal (S_{f}) based on the comparison between a network output signal (Sₒᵤₜ) and a target signal (Sₜₐᵣ).

## Description

### Technical domain

The present invention concerns a neural network electronic circuit designed for implementing information processing and training of complex neural networks such as deep neural networks.

### Related art

Different kind of bio-inspired physical (hardware) or virtual (software) neural network circuit are known in the prior art, and aimed at different purposes such as:
- Functions approximation (which can be viewed as the key for all other applications)
- Classification
- Tracking
- Pattern/object recognition
- Speech recognition
- Models generation (text, music, images, etc.)
- Signal processing
- Sorting/searching
- Decoding/translation
- Etc

In particular, two main types of so called "artificial intelligence" systems using neural networks are widely used: virtual, centralized, high performances systems (cloud-supercomputer-based architectures) and local, usually hardware-based systems ("at the edge" systems). The present invention can be related to both types of system, either used as a single chip or combined to build big networks capable of high-performance while maintaining a low-energy consumption.

As opposed to typical computers based on the Von Neuman architecture (on ore more processing unit, one centralized memory unit, one sequential state machine with limited parallelism), neural networks use simple, dense interconnected, decision units called neurons working in parallel.

Conversely to Von Neuman machines which need precompiled instructions files from a higher-level description (aka application programs), neurons and their interconnections (sometimes called weights or "synapses" like the brain ones) must be configured/personalized for every intended task. This process is called "learning" and is a critical part of the application. In specialized hardware, neurons are implemented via an electrical circuit and computations run directly on hardware.

There are multiple types of neural networks, depending on the neuron capabilities and the interconnections schemes.

A neuron is usually a simple operator, performing a non-linear function (decision, firing) of weighted inputs.

The connections between neurons define the different types of networks and their applications. The most important types of virtual, software-based neuron networks in use today are:
- DNN: deep neuron network, multi-layer feedforward network;
- CNN: convolutional networks, using differentiated layers for local and global data processing;
- RNN: recurrent networks, reusing outputs along with inputs in the weighted sum;
- GANS: general adversarial networks, Autoencoders, deep Q-networks and LSTM networks, Bayesian Networks as well as autoregressive and transformer networks;
- Etc.

Other networks may be used for spiking neuron networks, like fully connected neurons clusters.

Single or multi-layers DNN can support multiple neuron functions implementations. Most common are Perceptron (SLP/MLP) and Radial Basis Functions (RBF). Both have been proven universal function approximators. Beyond implementation details, these models differ by their learning requirements.

Hardware implementations of neuronal networks represent a small subset of recent publications. They come in different types too:
- Hardware accelerators
- Analog, "brain like" networks
- Associative memories
- Digital networks of neurons/basic processors
- Neuromorphic devices
- Etc

Hardware implementation of neural networks cover a limited spectrum of neural networks. While the software implementation running on Von Neuman machines are highly flexible, they are also slow and energy inefficient. Conversely, hardware implementation major interest lies in improving processing speed through very high parallelism capabilities, local memory deep usage, and can offer power/processing outstanding ratios.

Some examples of hardware based neural networks include:
- Tensor Processing Units (accelerators for parallel weight/data multipliers/accumulators and threshold detectors)
- Convolution accelerators;
- Processor in memory;
- Spiking neurons networks (such as event driven mixed behaviour);

As already mentioned, running neural networks on computers is infeasible for applications such as Edge AI, and generally very costly in terms of energy consumption. It is then necessary to run them in dedicated hardware. In terms of energy efficiency for continuously-running on-chip learning systems, the most energy and space efficient option is to use analog circuits.

However, analog circuits suffer from device mismatch. The design of small, energy efficient chips is hindered by device mismatch, meaning that the real circuit deviates from the original design. This problem becomes more and more prominent as the energy and area of the circuit become smaller, to the point that it is often worse than thermal noise.

Training algorithms for deep neural networks require very precise circuit nonlinearities and parameters. Backpropagation, for instance, requires precise models of the network that it trains to calculate derivatives. In fact, most calculus-based optimization methods have this requirement. Energy based models, on the other hand, do not require such knowledge, but they require symmetry in the neurons; current must flow equally well in both directions for every node, and this requires neurons that have twice the same circuit in both directions. As it is impossible to make efficient, small and precise circuits, it is unrealistic to expect that those local circuits will have the same circuit in both directions.

Most current network training approaches try to address algorithmic energy as well as memory efficiency shortcomings using discrete time artificial neural networks (ANNs) and standard stochastic gradient backpropagation (SGD-BP). However, because standard learning methods operate in discrete time, they are practically ill posed for addressing the problems described above in particular when it comes to continual learning, memory efficient computing and low energy computing.

The document WO2018081600A1 discloses a neural network circuit in which the neurons include a recognition unit and a generative unit. The recognition units are connected between them, and the generative units are connected between them. A controller is configured to drive the network towards a desired activity. However, this circuit does not allow the controller to provide a feedback simultaneously to each neurons in every hidden layer in the network and the learning phase alternates between a wake phase and a sleep phase, which cause the network to have to run twice.

In PODLASKI William and MACHENS Christian, Biological credit assignment through dynamic inversion of feedforward networks, NeurIPS, 2020, a mathematical model for the inversion of the feedforward network transformations is disclosed. However, the learning of the neural weights is mediated by a dynamic inversion method that converses to the error and thus is in principle similar to backpropagating an error signal.

In ALEMI Alireza et al., Learning arbitrary dynamics in efficient, balanced spiking networks using local plasticity rules, AAAI, 2018, a mathematical model for the dynamical control or recurrent neural networks, however the learning method is limited to neural networks having a single hidden layer and is therefore not suited for deep neural networks.

In MEULEMANS Alexander et al., A theoretical framework for target propagation, Advances in Neural Information Processing Systems, 2020, a target propagation-like method is disclosed. The method combines elements of standard target propagation and elements of Gauss-Newton optimization. However, this method does not involve any controller as a feedback can be provided to the neurons in the hidden layers, but directly from the output layer.

In BENGIO Yoshua, Deriving differential target propagation from iterating approximate inverses, arXiv preprint arXiv:2007.15139, 2020, a target propagation-like method is disclosed. This method also combines elements of standard target propagation and Gauss-Newton optimization. However, this method is limited to invertible networks, hence networks with the same layer size for all layers and invertible nonlinearities.

There is therefore a need for neural network circuits capable of combining energy efficiency and robust training of complex neural networks, in particular deep neural networks having an arbitrary number of hidden layers of variable size.

### Short disclosure of the invention

An aim of the present invention is the provision of a neural network circuit that overcomes the shortcomings and limitations of the state of the art.

Another aim of the invention is to provide a neural network circuit that is energy efficient and allows the implementation and the training of complex neural networks such as deep neural networks having an arbitrary number of hidden layers of variable size..

According to the invention, these aims are achieved by means of a neural network electronic circuit (1) comprising, an input layer (10); at least one hidden layer (20), wherein the hidden layer is operatively connected to the input layer;
an output layer (30), wherein the output layer is operatively connected to the hidden layer;
a first control unit (40) operably connected to the hidden layer and output layer; and
wherein the hidden layer comprises a plurality of neurons (21) for processing at least one first signal (S₁) which the hidden layer receives from the input layer; and wherein the output layer comprises at least one output neuron (31) for processing at least one second signal (S₂) which the output layer receives from the hidden layer;
**characterized in that,** each respective neuron in the hidden layer comprises,
(i) a first forward compartment (210) configured for receiving and processing in a first forward computing unit (2100) the first signal (S₁) received from the input layer, and for generating a third signal (S₃) based on the first signal (S₁) and based on an associated first set of forward weights (W₁) stored in a first forward memory unit (2101),
(ii) a first feedback compartment (211) configured for receiving and processing, in a first feedback computing unit (2110), a feedback signal (S_{f}) received from the first control unit (40), and for generating a fourth signal (S₄) based on the feedback signal (S_{f}) and based on an associated first set of feedback weights (Q₁) stored in a first feedback memory unit (2111),
(iii) a first central compartment (212) connected to said first forward and first feedback compartments (210,211) and configured for receiving and processing in a first central computing unit (2120) the third signal (S₃) from the first forward compartment (210) and the fourth signal (S₄) from the first feedback compartment (211), and configured to generate the second signal (S₂) based on the third and fourth signals (S₃ S₄);
and the output neuron in the output layer comprises,
(iv) a second forward compartment (310) configured for receiving and processing, in a second forward computing unit (3100), the second signal (S₂) from a neuron in the hidden layer, and for generating a fifth signal (S₅) based on the second signal (S₂) and based on an associated second set of forward weights (W₂) stored in a second forward memory unit (3101),
(v) a second feedback compartment (311) configured for receiving and processing, in a second feedback computing unit (3110), the feedback signal (S_{f}), and for generating a sixth signal (S₆) based on the feedback signal and based on an associated second set of feedback weights (Q₂) stored in a second feedback memory unit (3111),
(vi) a second central compartment (312) connected to said second forward and second feedback compartments (310,311) and configured for receiving and processing, in a second central computing unit (3120), the fifth signal (S₅) from the second forward compartment and the sixth signal (S₆) from the second feedback compartment, and configured to generate a seventh signal (S₇) based on the fifth and sixth signals;
and wherein said first control unit (40) is connected to the output layer (30) and configured to receive a network output signal (Sₒᵤₜ) from the output layer, based on the seventh signals (S₇) of the second central compartment (312) of the output neuron (31), and wherein said first control unit is further individually connected to the first feedback compartment (211) of each respective neuron (21) in the hidden layer and to the second feedback compartment (311) of the output neuron (31) in the output layer and is configured to generate the feedback signal (S_{f}) based on a comparison between said network output signal (Sₒᵤₜ) and a stored target signal (Sₜₐᵣ).

Preferably the least one hidden layer is operatively connected to the input layer; the output layer is operatively connected to the hidden layer. The least one hidden layer maybe operatively connected between the input layer and output layer. Preferably the first control unit is operably connected to the hidden layer and output layer. A layer is operatively connected to another layer if said layers are connected in any suitable way that will allow a signal to be passed from one layer to the other.

The circuit can further comprise the first forward, feedback and central computing units (2100,2110,2120), and further comprise the second forward, feedback and central computing units (3100,3110,3120).

The circuit may further the first forward and feedback memory unit(s) (2101,2111) and further comprise the second forward and feedback memory units (3101,3111).

The first forward computing unit (2100) can be configured to update the first set of forward weights (W₁) based on the first, the second and the third signal (S₁,S₂,S₃), and wherein the second forward computing unit (3100) can be configured to update the second set of forward weights (W₂) based on the second, the fifth and the seventh signal (S₂, S₅, S₇).

The first feedback computing unit (2110) can be configured to update the first set of feedback weights (Q₁) based on an approximation of an inverse of a function of the first set of forward weights (W₁) and based on the feedback signal (S_{f}), and wherein the second feedback computing unit (3110) can be configured to update the second set of feedback weights (Q₂) based on an approximation of an inverse of a function of the second set of forward weights (W₂) and based on the feedback signal (S_{f}) .

The first forward and/or feedback and/or central computing units (2100,2110,2120) and the second forward and/or feedback and/or central computing units (3100,3110,3120) can be digital, or analog, or a combination of digital and analog.

The first control unit (40) can be a proportional and/or integrative and/or derivative controller.

The first control unit (40) can be a neural network proportional and/or integrative and/or derivative controller.

The circuit can further comprise a second control unit individually connected to each respective neuron (21) in the hidden layer and to the output neuron (31) in the output layer, the second control unit being configured to generate and send a control signal to the neurons in the hidden layer and to the output neuron in the output layer so as to modify activation parameters of the neural network.

The control signal can be generated based on the second signal (S2) generated by the first central computing unit (2120) of the neurons in the hidden layer and/or based on the seventh signal (S7) generated by the second central computing unit (3120) of the output neuron.

The second control unit can be a proportional and/or integrative and/or derivative controller.

The circuit can comprise at least two hidden layers (20), wherein a first hidden layer is operably connected to the input layer (10) and a second hidden layer is operably connected to the output layer (30).

The circuit can comprise at 'n' hidden layers (20), wherein 'n' is greater than two, and wherein the 'n' hidden layers are connected consecutively, and wherein a first hidden layer is operably connected to the input layer (10), and the 'n^{th}' hidden layer is operably connected to the output layer (30).

The number of hidden layers (20), the number of neurons (31) in each hidden layer and the number of connections between said neurons can implement a fully connected neural network, a (single or multi-layered) deep neural network, a convolutional neural network, an autoencoder neural network, a generative adversarial network, a recurrent neural network, a LSTM neural network, a spiking neural network, or any combinations of the mentioned networks.

### Short description of the drawings

Exemplar embodiments of the invention are disclosed in the description and illustrated by the drawings in which:
Figure 1 illustrates schematically a neural network circuit with three layers of neurons and a control unit.
Figure 2a illustrates schematically a neuron of a hidden layer with 3 compartments.
Figure 2b illustrates schematically a neuron of the output layer with 3 compartments.
Figure 3 illustrates schematically a neural network circuit comprising neurons with three compartments.
Figure 4a illustrates schematically a neuron of a hidden layer processing an incoming signal.
Figure 4b illustrates schematically a neuron of the output layer processing an incoming signal.
Figure 5 illustrates schematically a neural network circuit with three layer of neurons and a control unit.

### Examples of embodiments of the present invention

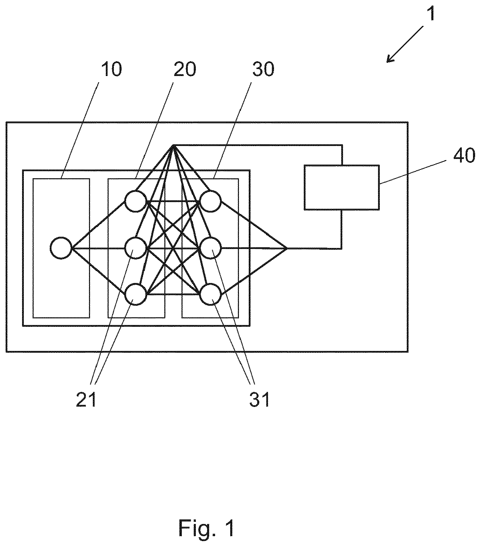

Figure 1 illustrates schematically a neural network electronic circuit comprising a neural core composed of several layers of neurons and comprising a first control unit. In particular, the neural core comprises an input layer, at least one hidden layer and an output layer, each layer being composed of one or more neurons. The output layer is electrically connected to the first control unit, which is itself electrically connected individually to each respective neuron in the hidden and output layers.

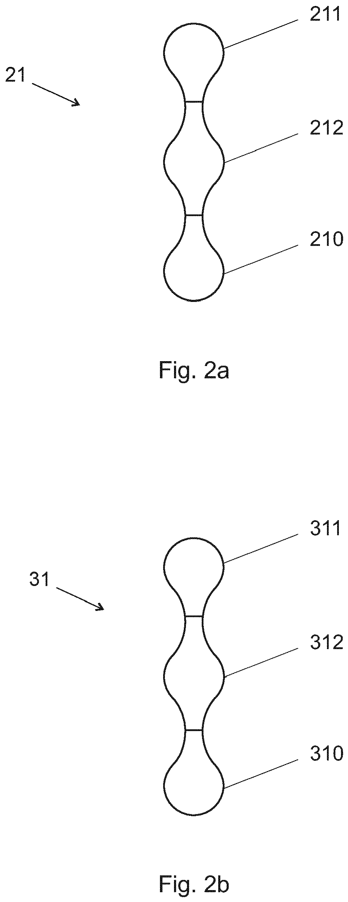

As illustrated in Figure 2a, each respective neuron 21 in the hidden layer(s) 20 has a particular tri-compartmented structure that comprises a first forward compartment 210, a first feedback compartment 211, and a first central compartment 212. Both the first forward and the first feedback compartment are connected to the first central compartment so as to allow the transmission of electric signals from the first forward and first feedback compartments to the first central compartment of the same neuron. The first forward compartment 210 can be electrically connected to the input layer 10 if the neuron belongs to the first hidden layer or to the first central compartment 212 of a preceding neuron in the preceding hidden layer if there are more than one hidden layer and if the neuron belongs to a hidden layer which is not the first hidden layer of the network. Moreover the first central compartment 212 is electrically connected to one or more neuron in the next layer so as to be able to transmit electric signals to at least one neuron that belongs to a next hidden layer or to the output layer. In addition to those connections between different layers, the first central compartment 212 of a neuron 21 can be electrically connected to the first forward compartment 210 of the same neuron, or the first forward compartment of a neuron in the same hidden layer.

For the sake of clarity, neurons belonging to the output layer 30 will be referred to as output neurons 31 although their structure does not differ from the structure of the neuron 21 in the hidden layer(s).

Indeed, as represented in Figure 2b, output neurons 31 in the output layer 30 share the same tri-compartmented structure as the neurons 21 in the hidden layer(s). In particular, an output neuron 31 comprises a second forward compartment 310, a second feedback compartment 311, and a second central compartment 312. Both the second forward and the second feedback compartment are connected to the second central compartment so as to allow the transmission of electric signals from the second forward and second feedback compartments to the second central compartment of the same output neuron. The second forward compartment 310 can be electrically connected to the first central compartment 212 of at least one neuron in the preceding layer which is a hidden layer 20 of the network. In addition to these inter-layer connection, the second forward compartment can also be connected to the second central compartment of the same output neuron or to the second central compartment of a different output neuron in the output layer 30. Moreover the second central compartment 312 of an output neuron 31 is electrically connected to the first control unit 40 so as to be able to transmit output electric signals from the output neuron to the first control unit 40.

The first control unit 40 is connected to the output layer 30 so as to be able to receive and process electric output signals generated by output neuron in the output layer. The first control unit is also individually connected to each neuron 21 in the hidden layer(s) and each output neuron 31 in the output layer so as to send an electric feedback signal S_{f}. More precisely, the first control unit 40 is individually connected to the first feedback compartment 211 of each respective neuron in the hidden layer(s) and to each second feedback compartment 311 of each respective output neuron in the output layer.

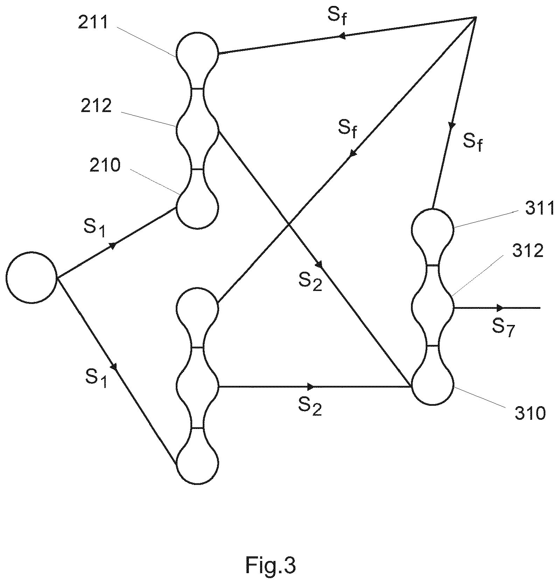

In a particular embodiment illustrated in Figure 3, the input layer can comprise one input neuron, the hidden layer can comprise a plurality of neurons 21 and the output layer can comprise at least one output neuron 31. The first forward compartments 210 of the two neurons 21 in the hidden layer are connected to the input neuron in the input layer, the first central compartments 212 of these neurons are connected to the second forward compartment 310 of the output neuron 31 in the output layer, and the second central compartment 312 of the output neuron is connected to the first control unit 40. Moreover, the first control unit is connected to the first feedback compartments 211 of the two neurons in the hidden layer and to the second feedback compartment 311 of the output network.

Neurons in the input layer 10 are not required to share the same compartmented structure as no processing is operated in those neurons. They are simply connected to at least one first forward compartment 210 of a neuron 21 in the next layer (which is the first hidden layer) so as to transmit the first signal S₁.

In a particular embodiment represented in Figure 3, the neural network circuit comprises exactly one hidden layer. In this case, the first forward compartment 210 of a neuron in the hidden layer is configured to receive and process a first electric signal S₁ from at least one neuron in the input layer and to generate a third signal S₃ that is based on the first signal and a first set of forward weights W₁. A first forward activation function (preferably a nonlinear activation function) can further be applied to generate the third signal S₃.

The third signal S₃ is generated by a first forward computing unit 2100 that computes a weighted sum of the first signal S₁ and the first set of forward weights W₁, and that applies a first forward activation function (or non-linearity) to the weighted sum. The first set of forward weights W₁ and the parameters of the first forward activation function are stored in a first forward memory unit 2101.

The first forward computing unit 2100 as well as the first forward memory unit 2101 can be purely analog, or purely digital, or both analog and digital.

The first forward computing unit 2100 can be integrated with the neuron itself (for example in the case of certain analog computing units) or can consist in on- or off-chip computing unit such as for example GPUs, CPUs, FPGAs or ASICs. Other type of computing units may be considered according to the specific needs of the use.

Similarly, the first forward memory unit 2101 can be integrated within the neuron itself and/or can comprise on- or off-chip memory blocks. These memory blocks can be distributed so as to minimize the computing time of the first forward computing unit 2100 or regrouped in a single memory block for design reasons.

In a particular embodiment, the first forward computing unit 2100 is integrated within each first forward compartment 210 of the respective neuron and processes the received analog signals. For example, devices such as charge-trapping transistors (CTTs) may be used for processing the signals without any analog-to-digital conversion of the different signals. Such devices may even be used as analog memory units so that the first forward memory units 2101 can be integrated within the first forward compartment of each neuron.

In another embodiment, the first forward computing unit 2100 may comprise digital components such as for example FPGAs or ASIC circuits as well as the first forward memory unit 2101 which may comprise digital memory blocks such as static random-access memory (SRAM) or dynamic random-access memory (DRAM). Any other suitable type of digital memory units can be used by the man skilled in the art.

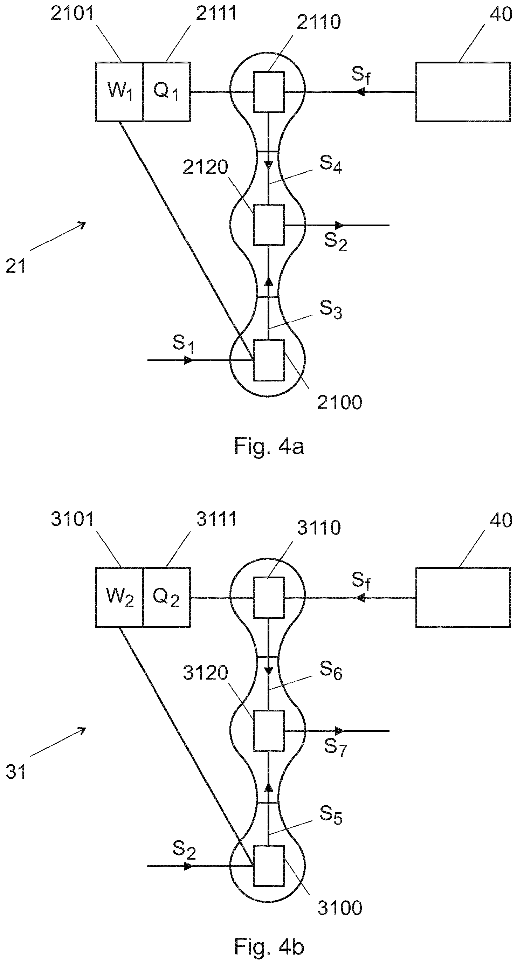

In an embodiment illustrated in Figure 4a, the first forward computing unit 2100 is integrated within the first forward compartment 210 of the neuron 21. The first set of forward weights W₁ is stored in a first forward memory unit 2101 that is external to the neuron and electrically connected to the first forward computing unit.

As illustrated in Figure 4a, the third signal S₃ is then sent from the first forward compartment 210 to the first central compartment 212 of the neuron 21. In addition to this third signal S₃, the first central compartment also receives a fourth signal S₄ generated by the first feedback compartment 211 of the same neuron.

The first feedback compartment 211 is designed to receive a feedback directly from the first control unit 40, without backpropagation of a signal through all layers of the network. The first feedback compartment is electrically connected to the first central compartment of the neuron and to the first control unit so as to be able to receive a feedback signal S_{f} from the first control unit.

As in the case of the first forward compartment 210, the first feedback compartment 211 is arranged to process the feedback signal S_{f} in a first feedback computing unit 2110 that computes a weighted sum of the feedback signal S_{f} with a first set of feedback weights Q₁ stored in a first feedback memory unit 2111. The fourth signal S₄ is then generated from this weighted sum and may include applying a linear or non-linear activation function that can be identical or not to the non-linearity that can be applied in the first forward compartment. The parameters of this non-linearity can be stored in the first feedback memory unit 2111.

As described before in the case of the first forward compartment, the first feedback unit and/or the first feedback memory unit can be purely analog, purely digital, or a combination of analog and digital components. They may also be integrated within the neuron, for example, using charge-trapping transistors or distributed over the chip according to the specific needs of the circuit. All other embodiments and examples described above concerning the first forward processing and memory units 2100,2101 apply in the case of the first feedback processing and memory units 2110,2111.

The fourth signal S₄ is then sent to the first central compartment 212. Once the first central compartment has received the third signal S₃ and the fourth signal S₄, a first central computing unit 2120 generates a second signal S₂ based on the third and fourth signals (S₃, S₄) and sends this second signal to at least one neuron in the next layer. The generation of the second signal S₂ may include applying a linear or non-linear activation function.

In one embodiment represented in Figure 3, the first central compartments 212 of the neurons 21 in the hidden layer send the second signal S2 to a second forward compartment 310 of an output neuron 31 in the output layer.

More generally, if the neural network comprises at least two hidden layers, the fist central compartments 212 of a neuron in a hidden layer can send the signal S₂ either to the first forward compartment 210 of a neuron in a next hidden layer if the next layer is a hidden layer or to the second forward compartment of an output neuron if the next layer is the output layer.

The fist central compartments 212 of a neuron in a hidden layer may also send the signal S₂ to the first forward compartment 210 of the same neuron or of another neuron in the same layer.

The structure and the operation of the output neurons 31 in the output layer 30 is identical to those of neurons 21 in a hidden layer 20 apart from the fact that the preceding layer is always a hidden layer and that their signal output can only be sent either to an output neuron in the output layer or to the first control unit 40 since there is no succeeding layer.

As illustrated in Figure 4b, the second forward compartment 310 of an output neuron 31 is designed to receive from a neuron in the previous layer (which is a hidden layer) the second signal S₂ and to process this second signal in the second forward computing unit 3100. The second forward compartment 310 is also further designed to generate, in the second forward computing unit 3100, a fifth signal S₅ that is based on the second signal S₂ and on a second set of forward weights W₂. A second forward activation function (preferably a nonlinear activation function) can further be applied to generate the fifth signal S₅.

The fifth signal S₅ is generated by the second forward computing unit 3100 which computes a weighted sum of the second signal S₂ and the second set of forward weights W₂, and which applies a second forward activation function (or non-linearity) to the weighted sum. The second set of forward weights W₂ and the parameters of the second forward activation function are stored in a second forward memory unit 3101.

Similarly to the neurons in the hidden layers, the second forward computing unit 3100 as well as the second forward memory unit 3101 of output neurons can be purely analog, or purely digital, or a mix of analog and digital components.

The second forward computing unit 3100 can be integrated with the output neuron itself (for example in the case of certain analog computing units) or can consist in on- or off-chip computing units such as for example GPUs, CPUs, FPGAs or ASICs. Other type of computing units may be considered according to the specific needs of the use.

Similarly, the second forward memory unit 3101 can be integrated within the output neuron 31 itself and/or can comprise on- or off-chip memory blocks. These memory blocks can be distributed so as to minimize the computing time of the second forward computing unit 3100 or regrouped in a single memory block for physical design reasons.

In a particular embodiment, the second forward computing unit 3100 is integrated within each second forward compartment 310 of the respective output neuron and processes the received analog signals. For example, devices such as charge-trapping transistors (CTTs) may be used for processing the signals without any analog-to-digital conversion of the different signals. Such devices may even be used as analog memory units so that the second forward memory units 3101 can be integrated within the second forward compartment of each output neuron.

In another embodiment, the second forward computing unit 3100 may comprise digital components such as for example FPGAs or ASIC circuits as well as the first forward memory unit 3101 which may comprise digital memory blocks such as static random-access memory (SRAM) or dynamic random-access memory (DRAM). Any other suitable type of digital memory units can be used by the man skilled in the art.

In an embodiment illustrated in Figure 4b, the second forward computing unit 3100 is integrated within the second forward compartment 310 of the output neuron 31. The second set of forward weights W₂ is stored in a second forward memory unit 3101 that is external to the output neuron and electrically connected to the second forward computing unit.

As illustrated in Figure 4b, the fifth signal S₅ is then sent from the second forward compartment 310 to the second central compartment 312 of the neuron 31. In addition to this fifth signal S₅, the second central compartment also receives a sixth signal S₆ generated by the second feedback compartment 311 of the same output neuron.

As in the case of neurons in the hidden layer(s), the second feedback compartment 311 of an output neuron 31 is electrically connected to the second central compartment 312 of the output neuron and to the first control unit 40 so as to be able to receive a feedback signal S_{f} from the first control unit.

As in the case of the second forward compartment 310, the second feedback compartment 311 is arranged to process the feedback signal S_{f} in a second feedback computing unit 3110 that computes a weighted sum of the feedback signal S_{f} with a second set of feedback weights Q₂ stored in a second feedback memory unit 3111. The sixth signal S₆ is then generated from this weighted sum by further applying a non-linearity that can be identical or not to the non-linearity applied in the second forward compartment 310. The parameters of this non-linearity can be stored in the second feedback memory unit 3111.

As described before in the case of the second forward compartment 310, the second feedback computing unit 3100 and/or the second feedback memory 3110 unit can be purely analog, purely digital, or a combination of analog and digital components. They may also be integrated within the output neuron, for example, using charge-trapping transistors or distributed over the chip according to the specific needs of the circuit. All other embodiments and examples described above concerning the second forward processing and memory units 3100,3101 apply in the case of the second feedback processing and memory units 3110,3111.

The sixth signal S₆ is then sent to the second central compartment 312. Once the second central compartment 312 has received the fifth signal S₅ and the sixth signal S₆, a second central computing unit 3120 generates a seventh signal S₇ based on the fifth and sixth signals (S₅,S₆) and sends this seventh signal to the first control unit 40. The generation of the seventh signal S₇ may include applying a linear or non-linear activation function.

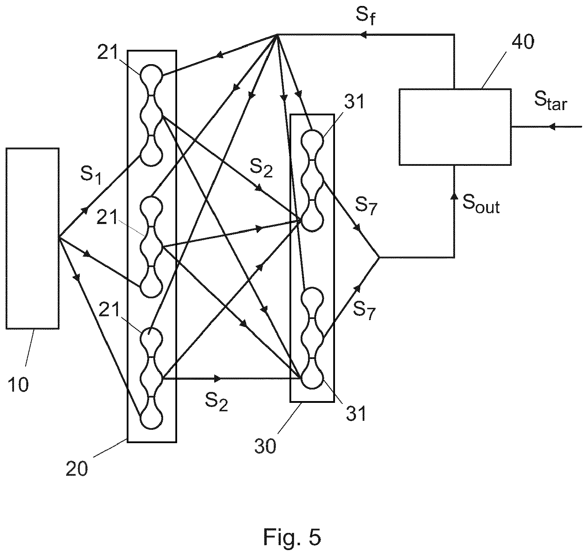

In one embodiment illustrated in Figure 5, the neural network circuit comprises a plurality of output neurons 31 in the output layer 30. The seventh signals S₇ generated by the second central compartments 312 of the output neurons in the output layer are used to generate a network output signal Sₒᵤₜ that is sent to the control unit 40. The network output signal Sₒᵤₜ can consist of all the seventh signals concatenated into one longer signal.

On a more abstract point of view, one can think of such the first (resp. second) feedback compartment of a neuron as an integrated proportional/integral controller that updates the first (resp. second) sets of forward and feedback weights (W₁,Q₁) (resp. (W₂,Q₂)) until the difference between the second signal S₂ (resp. seventh signal S₇) and the third signal S₃ (resp. fifth signal S₅) is driven to zero, or, in other words, until the contribution of the feedback signal S_{f} to the first (resp. second) set of feedback weights is reduced to zero. This integrated neuron controller can also be enhanced with differential control.

As illustrated in Figure 5, the output layer 30 is connected to a control unit 40 whose purpose is to train the neural network by providing a feedback signal S_{f} to the network reflecting whether the output signal Sₒᵤₜ corresponds to a desired target output or not. The first control unit is individually connected through to each neuron in the hidden layer(s) and to each output neuron in the output layer so that the feedback signal S_{f} is sent simultaneously to all those neurons, allowing a dynamic feedback to the network. More precisely, the first control unit 40 is electrically connected to the first feedback compartment 211 of each respective neuron 21 in the hidden layer(s) and to the second feedback compartment 311 of each output neuron 31 in the output layer.

While the circuit comprising the neurons and their connections can be made energy efficient, small and have mismatch, the first control unit 40 can be internal (on chip) but also external and contain more costly circuitry that learns a parametrization of the neural core circuits. Since the first and second feedback weights (W₁,W₂) are learned autonomously and locally, they do not require a precise model of the neural core circuit, hence device mismatch is tolerated.

The first control unit 40 is configured to receive the network output signal Sₒᵤₜ and to compare it to a stored target signal Sₜₐᵣ which can be stored in the first control unit itself or in an external memory unit. The first control unit then generates a feedback signal S_{f} based on an error function of the network output signal Sₒᵤₜ and the target output signal Sₜₐᵣ, and which is then sent to the first and second feedback compartments of each neuron in the hidden layer(s) and each output neuron in the output layer. The error function can be, for example, the difference between the network signal output Sₒᵤₜ and the target signal Sₜₐᵣ.

In a particular embodiment, the first control unit 40 can be implemented, for example, by a hardware proportional and/or integrative and/or derivative controller (PID controller). Preferably, the controller is a proportional and integrative controller (PI controller). Such a PI controller computes the difference between the network output signal Sₒᵤₜ and the target signal Sₜₐᵣ and generates the feedback signal S_{f} based on the magnitude of this difference (proportional) and based on the average of this difference over a period of time (integrative).

The PID controller may additionally comprise an auxiliary hardware neural network (NNPID controller) for solving non-linear control problems and computing the feedback signal S_{f}.

Various implementation of such PID controllers can be considered, for example using FPGA controllers or FPGA controllers coupled with DSP boards implementing the auxiliary neural networks. Other implementations of PID, PI or NNPID controllers can be considered by the man skilled in the art.

If the first control unit 40 determines that the error function between the network output signal Sₒᵤₜ and the target signal Sₜₐᵣ is zero, or in other word if the network output signal coincides with the target signal, for example by crossing pre-determined programmable threshold, then the first control unit continues to operate and to generate the feedback signal S_{f} until all first and second forward/feedback sets of weights (W₁,Q₁,W₂,Q₂) are learned. Once all weights are learned and the error function is zero, the first control unit stops to generate the feedback signal.

When the neural network circuit is not in a learning phase, the first control unit 40 does not engage as no adaptation of the different weights is needed.

One can think of the first control unit 40 as performing a dynamical inversion of the target signal Sₜₐᵣ towards the hidden layer(s), as it dynamically changes the activation of the hidden layer(s) until the network output signal Sₒᵤₜ coincides with the output target signal Sₜₐᵣ.

As for traditional neural networks, the training of the neural network circuit lies in the updating of the different neural weights i.e. in the present case, in the updating of the first and second sets of forward and feedback weights (W₁,Q₁,W₂,Q₂). These sets can be updated in the first and second forward/feedback memory units (2101,2111,3101,3111) by the first and second forward/feedback computing units (2100,2110,3100,3110) according to different learning rules.

The first (resp. second) set of forward weights W₁ (resp. W₂) can be updated according to an error or delta rule using the difference between the actual firing rate of the first (resp. second) central compartment of the neuron (resp. output neuron) which is based on the third and fourth signals (S₃,S₄) (resp. the fifth and sixth signals (S₅,S₆)), and the firing rate of the first (resp. second) forward compartment based on the first signal S₁ (the second signal S₂). In this case, the first and second forward weights (W₁,W₂) are learned locally in space and time since all computations can be realized at each time step in the first (resp. second) forward computing unit 2100 (resp. 3100) and the first (resp. second) forward weights accordingly updated in the first (resp. second) forward memory unit 2101 (resp. 3101).

In a particular embodiment, the first (resp. second) forward computing unit 2100 (resp. 3100) computes the difference between the second signal S₂ (resp. seventh signal S₇) and the third signal S₃ (resp. fifth signal S₅) and multiplies this difference with the first signal S₁ (resp. second signal S₂) as well as with a step-size parameter or learning rate to obtain a weight correction. This weight correction is then added to the original first (resp. second) forward weight W₁ (resp. W₂) to obtain the updated first (resp. second) forward weight that is stored back in the first (resp. second) forward memory unit 2101 (resp. 3101).

The updating of the first (resp. second) set of feedback weights Q₁ (resp. Q₂) stored in the first (resp. second) feedback memory unit 2101 (resp. 3101) can be realized by the first (resp. second) feedback computing unit 2100 (resp. 3100). The update rule for the first (resp. second) feedback weight integrates the feedback signal S_{f} as well as the fourth signal S₄ (resp. sixth signal S₆) so as to provide an approximation of an inverse function of the first (resp. second) forward weights W₁ (resp. W₂). This learning is therefore also local in time and space.

In a particular embodiment, the first (resp. second) feedback computing unit 2100 (resp. 3100) computes the product between the feedback signal S_{f} provided by the first control unit 40 and the fourth signal S₄ (resp. sixth signal S₆), and adds the result to the original first (resp. second) set of feedback weights Q₁ (resp. Q₂) to obtain the updated first (resp. second) set of feedback weights which is stored back in the first (resp. second) feedback memory unit 2111 (resp. 3111).

The learning rules of both the forward and feedback weights can be adapted/modified according to the specific needs and use cases of the circuit.

The neural network circuit may comprise in addition to the first control unit 40, a second control unit for tracking and controlling particular activities of the network, such as for example the activation of a specific subset of neurons. This second control unit can be a controller individually connected to each respective neuron in the hidden layer(s) and output neuron(s) in the output layer of the network so as to be able to receive signals from each neuron and output neuron and send back a regulation signal to at least one of the different (first/second forward, feedback and central) computing units. Alternatively, this second control unit can be connected only to a specific subset of neurons in the neural network, for example to the neurons in the hidden layer(s). Other way of connecting the second control unit to the neurons can be considered according to the specific needs.

In addition, the second control unit can be configured for outputting signals containing information about the specific activation of certain subnetworks of the neural network during a training phase. Indeed, it is not rare that particular subnetworks are better suited for performing certain tasks than other subnetworks. Such features are particularly useful for allowing efficient continual learning of neural networks.

In a particular embodiment, the second control unit can be a PID controller individually connected to the central compartment of each respective neuron (or to the central compartment of a smaller subset of neurons) and configured to receive the second signals S₂ generated by these first central compartments. The second control unit can for example impose constraints on the number of activated neurons by sending regulations signals to each neurons based on the comparison between the total activity of the network at a given time (i.e. the sum of all second signals) and a stored target activity. More generally, a large variety of cost functions can be implemented in order, for example, to drive the network activity towards a target activity, to obtain specific patterns or to minimize the cross entropy. Any suitable cost function can be implemented according to the specific needs of a situation.

Other embodiments of the present invention may include additional control units connected to the central compartments of each respective neuron or to a particular subset of neurons in order to control several aspects of the neural activity.

The present neural network electronic circuit can implement a large variety of neural networks. The number of neurons in the input layer, the number of hidden layers, the number of neurons in each hidden layer, the number of output neurons in the output layer as well as the connections between the different layers and between neurons in a same layer can be determined so that the circuit may implement, for example: fully connected neural networks, deep neural networks, convolutional neural networks, autoencoder neural networks, generative adversarial networks, recurrent neural networks, LSTM networks, spiking neural networks, or any combinations of the mentioned networks.

### Additional Features and Terminology

Depending on the embodiment, certain acts, events, or functions of any of the algorithms described herein can be performed in a different sequence, can be added, merged, or left out altogether (for example, not all described acts or events are necessary for the practice of the methods). Moreover, in certain embodiments, acts or events can be performed concurrently, for instance, through multi-threaded processing, interrupt processing, or multiple processors or processor cores or on other parallel architectures, rather than sequentially. In addition, different tasks or processes can be performed by different machines or computing systems that can function together.

The various illustrative logical blocks and modules described in connection with the embodiments disclosed herein can be implemented or performed by a machine, an analogue circuit, a microprocessor, a state machine, a digital signal processor (DSP), an application specific integrated circuit (ASIC), a FPGA, or other programmable logic device, discrete gate or transistor logic, discrete hardware components, or any combination thereof designed to perform the functions described herein. A hardware processor can include analogue electrical circuitry or digital logic circuitry configured to process computer-executable instructions. In another embodiment, a processor includes an FPGA or other programmable device that performs logic operations without processing computer-executable instructions. A processor can also be implemented as a combination of computing devices, e.g., a combination of a DSP and a microprocessor, a plurality of microprocessors, one or more microprocessors in conjunction with a DSP core, or any other such configuration. A computing environment can include any type of computer system, including, but not limited to, a computer system based on a microprocessor, a mainframe computer, a digital signal processor, a portable computing device, a device controller, or a computational engine within an appliance, to name a few.

The steps of a method, process, or algorithm described in connection with the embodiments disclosed herein can be embodied directly in hardware, in a software module stored in one or more memory devices and executed by one or more processors, or in a combination of the two. A software module can reside in RAM memory, flash memory, ROM memory, EPROM memory, EEPROM memory, registers, hard disk, a removable disk, a CD-ROM, or any other form of non-transitory computer-readable storage medium, media, or physical computer storage known in the art. An example storage medium can be coupled to the processor such that the processor can read information from, and write information to, the storage medium. In the alternative, the storage medium can be integral to the processor. The storage medium can be volatile or nonvolatile. The processor and the storage medium can reside in an ASIC.

Conditional language used herein, such as, among others, "can", "might", "may", "e.g.", and the like, unless specifically stated otherwise, or otherwise understood within the context as used, is generally intended to convey that certain embodiments include, while other embodiments do not include, certain features, elements or states. Thus, such conditional language is not generally intended to imply that features, elements or states are in any way required for one or more embodiments or that one or more embodiments necessarily include logic for deciding, with or without author input or prompting, whether these features, elements or states are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list. Further, the term "each," as used herein, in addition to having its ordinary meaning, can mean any subset of a set of elements to which the term "each" is applied.

Various modifications and variations to the described embodiments of the invention will be apparent to those skilled in the art without departing from the scope of the invention as defined in the appended claims. Although the invention has been described in connection with specific preferred embodiments, it should be understood that the invention as claimed should not be unduly limited to such specific embodiment.

## Claims

1. A neural network electronic circuit (1) comprising,
an input layer (10);
at least one hidden layer (20), wherein the hidden layer is operatively connected to the input layer;
an output layer (30), wherein the output layer is operatively connected to the hidden layer;
a first control unit (40) operably connected to the hidden layer and output layer; and
wherein the hidden layer comprises a plurality of neurons (21) for processing at least one first signal (S₁) which the hidden layer receives from the input layer; and wherein the output layer comprises at least one output neuron (31) for processing at least one second signal (S₂) which the output layer receives from the hidden layer;
**characterized in that,** each respective neuron in the hidden layer comprises,
(i) a first forward compartment (210) configured for receiving and processing in a first forward computing unit (2100) the first signal (S₁) received from the input layer, and for generating a third signal (S₃) based on the first signal (S₁) and based on an associated first set of forward weights (W₁) stored in a first forward memory unit (2101),
(ii) a first feedback compartment (211) configured for receiving and processing, in a first feedback computing unit (2110), a feedback signal (S_{f}) received from the first control unit (40), and for generating a fourth signal (S₄) based on the feedback signal (S_{f}) and based on an associated first set of feedback weights (Q₁) stored in a first feedback memory unit (2111),
(iii) a first central compartment (212) connected to said first forward and first feedback compartments (210,211) and configured for receiving and processing in a first central computing unit (2120) the third signal (S₃) from the first forward compartment (210) and the fourth signal (S₄) from the first feedback compartment (211), and configured to generate the second signal (S₂) based on the third and fourth signals (S₃ S₄);
and the output neuron in the output layer comprises,
(iv) a second forward compartment (310) configured for receiving and processing, in a second forward computing unit (3100), the second signal (S₂) from a neuron in the hidden layer, and for generating a fifth signal (S₅) based on the second signal (S₂) and based on an associated second set of forward weights (W₂) stored in a second forward memory unit (3101),
(v) a second feedback compartment (311) configured for receiving and processing, in a second feedback computing unit (3110), the feedback signal (S_{f}), and for generating a sixth signal (S₆) based on the feedback signal and based on an associated second set of feedback weights (Q₂) stored in a second feedback memory unit (3111),
(vi) a second central compartment (312) connected to said second forward and second feedback compartments (310,311) and configured for receiving and processing, in a second central computing unit (3120), the fifth signal (S₅) from the second forward compartment and the sixth signal (S₆) from the second feedback compartment, and configured to generate a seventh signal (S₇) based on the fifth and sixth signals;
and wherein said first control unit (40) is connected to the output layer (30) and configured to receive a network output signal (Sₒᵤₜ) from the output layer, based on the seventh signals (S₇) of the second central compartment (312) of the output neuron (31), and wherein said first control unit is further individually connected to the first feedback compartment (211) of each respective neuron (21) in the hidden layer and to the second feedback compartment (311) of the output neuron (31) in the output layer and is configured to generate the feedback signal (S_{f}) based on a comparison between said network output signal (Sₒᵤₜ) and a stored target signal (Sₜₐᵣ).

2. A circuit according to claim 1, further comprising the first forward, feedback and central computing units (2100,2110,2120), and further comprising the second forward, feedback and central computing units (3100, 3110, 3120) .

3. A circuit according to any of the preceding claims, further comprising the first forward and feedback memory unit(s) (2101,2111) and further comprising the second forward and feedback memory units (3101,3111).

4. A circuit according to claim 2, wherein the first forward computing unit (2100) can be configured to update the first set of forward weights (W₁) based on the first, the second and the third signal (S₁,S₂,S₃), and wherein the second forward computing unit (3100) can be configured to update the second set of forward weights (W₂) based on the second, the fifth and the seventh signal (S₂,S₅,S₇).

5. A circuit according to claim 2 wherein the first feedback computing unit (2110) can be configured to update the first set of feedback weights (Q₁) based on an approximation of an inverse of a function of the first set of forward weights (W₁) and based on the feedback signal (S_{f}), and wherein the second feedback computing unit (3110) can be configured to update the second set of feedback weights (Q₂) based on an approximation of an inverse of a function of the second set of forward weights (W₂) and based on the feedback signal (S_{f}).

6. A circuit according to claim 2, wherein first forward and/or feedback and/or central computing units (2100,2110,2120) and the second forward and/or feedback and/or central computing units (3100,3110,3120) can be digital, or analog, or a combination of digital and analog.

7. A circuit according to any of the preceding claims, wherein said first control unit (40) can be a proportional and/or integrative and/or derivative controller.

8. A circuit according to claim 7, wherein said first control unit (40) can be a neural network proportional and/or integrative and/or derivative controller.

9. A circuit according to any of the preceding claims, further comprising a second control unit individually connected to each respective neuron (21) in the hidden layer and to the output neuron (31) in the output layer, the second control unit being configured to generate and send a control signal to the neurons in the hidden layer and to the output neuron in the output layer so as to modify activation parameters of the neural network.

10. A circuit according to claim 9, wherein the control signal can be generated based on the second signal (S2) generated by the first central computing unit (2120) of the neurons in the hidden layer and/or based on the seventh signal (S7) generated by the second central computing unit (3120) of the output neuron.

11. A circuit according to any of the claims 9 or 10, wherein said second control unit can be a proportional and/or integrative and/or derivative controller.

12. A circuit according to any of the preceding claims, comprising at least two hidden layers (20), wherein a first hidden layer is operably connected to the input layer (10) and a second hidden layer is operably connected to the output layer (30).

13. A circuit according to any of the preceding claims, comprising at 'n' hidden layers (20), wherein 'n' is greater than two, and wherein the 'n' hidden layers are connected consecutively, and wherein a first hidden layer is operably connected to the input layer (10), and the 'n^{th}' hidden layer is operably connected to the output layer (30).

14. A circuit according to any of the preceding claims, wherein a number of hidden layers (20), a number of neurons (31) in each hidden layer and a number of connections between said neurons can implement a fully connected neural network, a deep neural network, a convolutional neural network, an autoencoder neural network, a generative adversarial network, a recurrent neural network, a spiking neural network, or any combinations of the mentioned networks.
